# EUROPÄISCHE PATENTSCHRIFT

(11) **EP 2 852 774 B1**
(45) Veröffentlichungstag und Bekanntmachung des Hinweises auf die Patenterteilung: **27.07.2016**
(21) Anmeldenummer: 13719107.8
(22) Anmeldetag: 29.04.2013
(51) Int. Cl.: F16F 1/38, F16F 1/371, F16F 1/44

(54) **SCHWINGUNGSDÄMPFER, INSBESONDERE EIN KOLBENSTANGENDÄMPFER FÜR EIN KRAFTFAHRZEUG**
VIBRATION DAMPER, IN PARTICULAR A PISTON-ROD DAMPER FOR A MOTOR VEHICLE
AMORTISSEUR DE VIBRATIONS, EN PARTICULIER AMORTISSEUR DE TIGE DE PISTON POUR UN VÉHICULE AUTOMOBILE

(30) Priorität: 22.05.2012 DE 102012208490
(43) Veröffentlichungstag der Anmeldung: 01.04.2015
(73) Patentinhaber: Schaeffler Technologies AG & Co. KG, 91074 Herzogenaurach (DE)
(72) Erfinder: HEITBAUM, Markus, 77830 Bühlertal (DE); FRIETSCH, Frank, 77830 Bühlertal (DE)
(86) Internationale Anmeldenummer: PCT/EP2013/058847
(87) Internationale Veröffentlichungsnummer: WO 2013/174618

(56) Entgegenhaltungen:
- EP-A2- 1 657 455
- DE-A1-102004 053 401
- DE-B3-102006 011 397
- US-A- 4 641 810

## Beschreibung

Die Erfindung betrifft einen Schwingungsdämpfer, insbesondere einen Kolbenstangendämpfer für ein Kraftfahrzeug, umfassend ein Dämpfungsgehäuse, welches eine Kolbenstange aufnimmt, die einen Stift umfasst, der in dem Dämpfungsgehäuse mit einem Spiel gelagert ist, wobei ein erster Teller der Kolbenstange mit dem Dämpfungsgehäuse verriegelt ist und zwischen der Kolbenstange und dem Dämpfungsgehäuse ein Dämpfungselement gelagert ist.

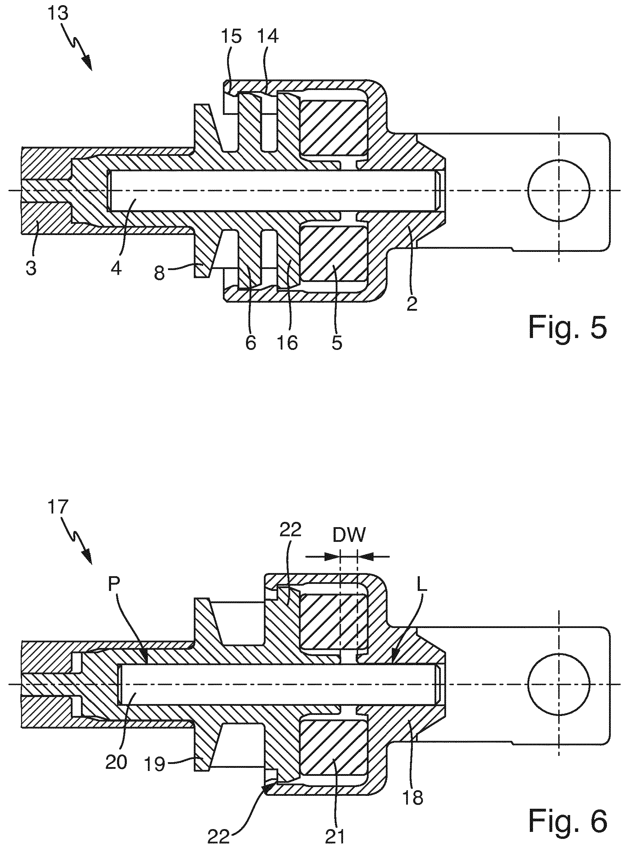

In einem Kraftfahrzeug werden zur Verbindung zwischen einem Kupplungspedal und einem hydraulischen Kupplungsgeberzylinder einer Kupplungsbetätigungseinrichtung Schwingungsdämpfer eingesetzt. Figur 6 zeigt einen Schwingungsdämpfer 17, welcher aus einem Dämpfungsgehäuse 18 und einer Kolbenstange 19 besteht. Die Kolbenstange 19 erstreckt sich dabei rotationssymmetrisch um einen Zylinderstift 20, welcher in einem Festlager P unbeweglich in der Kolbenstange 19 angeordnet ist. Der Zylinderstift 20 überragt die Kolbenstange 19 und greift mit dem freien Ende in das Dämpfungsgehäuse 18 ein, wo es in einem Loslager L mit einem vorgegebenen Spiel gelagert ist. Zwischen dem Dämpfungsgehäuse 18 und der Kolbenstange 19 ist ein Dämpfungselement 21 angeordnet. Ein erster rotationssymmetrisch ausgebildeter Teller 22 der Kolbenstange 19 ist hinter einem Endanschlag 23 des Dämpfungsgehäuses 18 verrastet. Durch das vorhandene Spiel zwischen dem Zylinderstift 20 und dem Dämpfungsgehäuse 18 ist zwischen dem Dämpfungsgehäuse 18, an welchem das Kupplungspedal des Kraftfahrzeuges angreift, und der mit der Kolbenstange 18 verbundenen Kupplung ein Dämpfungsweg DW vorgegeben, welcher maximal 2 mm beträgt. Beim Zurückschnellen des getretenen Kupplungspedals ist der axiale Endanschlag 23 des Dämpfungsgehäuses 18 einer hohen Kraft ausgesetzt. Liegt an dem axialen Endanschlag 23 eine sehr hohe Kraft an, so wird der Endanschlag 23 ausgerissen, was zu einer Beschädigung des Schwingungsdämpfers 17 führt.

Ein solcher Dämpfer ist auch aus der DE02006011397 B3 bekannt

Der Erfindung liegt somit die Aufgabe zugrunde, einen Schwingungsdämpfer anzugeben, welcher auch bei hohen Ausreißkräften, vorzugsweise über 1200 Newton, unbeschädigt bleibt.

Erfindungsgemäß wird die Aufgabe dadurch gelöst, dass die Verriegelung zwischen dem ersten Teller der Kolbenstange und dem Dämpfungsgehäuse als bajonettähnlicher Verschluss ausgebildet ist. Durch eine solche bajonettähnliche Verbindung werden die angreifenden Ausreißkräfte verteilt, so dass eine Beschädigung des Endanschlages des Dämpfungsgehäuses zuverlässig unterbunden wird. Dies gilt auch, wenn die angreifenden Ausreißkräfte einen Wert von 1200 Newton übersteigen.

Vorteilhafterweise weist zur Bildung des bajonettähnlichen Verschlusses der erste Teller der Kolbenstange mindestens einen Vorsprung auf, welcher in mindestens eine Ausnehmung an der Innenseite des Dämpfungsgehäuses eingreift und der Vorsprung gegenüber der Ausnehmung verdreht ist, wobei sich der Vorsprung und die Ausnehmung vorzugsweise radial an der Kolbenstange und dem Dämpfungsgehäuse erstrecken. Aufgrund dieser radialen Ausbildung wird eine zuverlässige Verriegelung zwischen dem ersten Teller der Kolbenstange und dem Dämpfungsgehäuse erreicht, welche stabil gegenüber angreifenden Ausreißkräften ist.

In einer Ausgestaltung ist der Vorsprung segmentartig ausgebildet, wobei die Ausnehmung eine zum Vorsprung komplementäre Form aufweist. Durch diese segmentartige Ausbildung des Vorsprungs und der Ausnehmung wird eine passgenaue Verriegelung erreicht, die die Montage des Schwingungsdämpfers vereinfacht.

In einer Variante greift ein radial durch das Dämpfungsgehäuse geführtes Spannelement als Verdrehschutz des bajonettähnlichen Verschlusses an der Kolbenstange an. Dadurch wird zuverlässig gewährleistet, dass sich der bajonettähnliche Verschluss während des Gebrauchs im Kraftfahrzeug nicht aus der verriegelten Position lösen kann.

Alternativ weist der von der Kolbenstange umfasste Stift als Verdrehschutz des bajonettähnlichen Verschlusses einen eckigen Querschnitt auf. Durch die Ausbildung des eckigen Querschnittes des Stiftes wird verhindert, dass sich die Kolbenstange gegenüber dem Dämpfungsgehäuse verdrehen kann. Der Verdrehschutz wird dabei ohne zusätzliche Bauteile erreicht, wodurch die Kosten für die Herstellung eines solchen Schwingungsdämpfers reduziert werden.

Vorteilhafterweise ist der Querschnitt des Stiftes sechseckig ausgebildet. Die Kolbenstange mit dem Dämpfungsgehäuse inklusive des Dämpfungselementes, die über den Bajonettverschluss mit anschließender Verriegelung durch den sechseckigen Zylinderstift verbunden ist, bildet dabei ein in sich geschlossenes Dämpfungssystem.

In einer Weiterbildung weist die Kolbenstange einen zweiten Teller zur Zentrierung der Kolbenstange an dem Dämpfungsgehäuse auf, welcher dem Dämpfungselement gegenüberliegend ausgebildet ist. Der zweite Teller liegt dabei nahe dem Dämpfungsgehäuse und direkt dem Dämpfungselement gegenüber. Durch diesen zweiten Teller wird bei der Montage des Schwingungsdämpfers eine einfache zentrierte Lagerung der Kolbenstange innerhalb des Dämpfungsgehäuses ermöglicht.

In einer anderen Ausführungsform ist ein dritter Teller der Kolbenstange dem Dämpfungselement abgewandt ausgebildet, dessen dem ersten Teller zugewandte Seite radial abgeschrägt ist. Dieser dritte Teller bildet dabei das Anschlusselement für den Zylinder der Kupplungsbetätigungseinrichtung. Der Schwingungsdämpfer bildet somit eine kompakte, in sich geschlossene Einrichtung ohne zusätzliche Bauteile, wobei hohe Ausreißkräfte keinen Schaden an dem Schwingungsdämpfer verursachen können.

Die Erfindung lässt zahlreiche Ausführungsformen zu. Eine davon soll anhand den in der Zeichnung dargestellten Figuren näher erläutert werden.

Es zeigt:
- Figur 1:: ein erstes Ausführungsbeispiel für einen Kolbenstangendämpfer für ein Kraftfahrzeug und Schnitte durch den Kolbenstangendämpfer
- Figur 2:: Montageschritte des Kolbenstangendämpfers nach Figur 1
- Figur 3:: ein zweites Ausführungsbeispiel für einen Kolbenstangendämpfer für ein Kraftfahrzeug und Schnitte durch den Kolbenstangendämpfer
- Figur 4:: Montageschritte des Kolbenstangendämpfers nach Figur 3
- Figur 5:: ein drittes Ausführungsbeispiel für einen Kolbenstangendämpfer
- Figur 6:: einen Kolbenstangendämpfer nach dem Stand der Technik

Gleiche Merkmale sind mit gleichen Bezugszeichen gekennzeichnet.

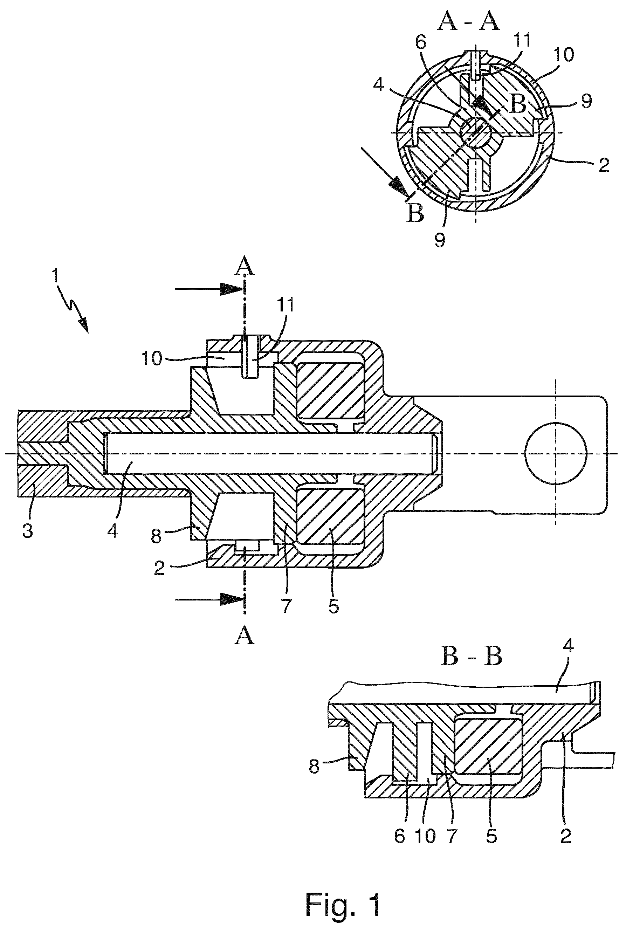

In Figur 1 ist ein Kolbenstangendämpfer 1 dargestellt, wie er zur Verbindung eines Kupplungspedals mit einem Geberzylinder eines Kupplungsbetätigungssystems in einem Kraftfahrzeug ausgebildet ist. Der Kolbenstangendämpfer 1 besteht aus einem Dämpfungsgehäuse 2, in welchen eine Kolbenstange 3 eingeschoben ist. Das Dämpfungsgehäuse 2 ist dabei mit einem nicht weiter dargestellten Kupplungspedal verbunden, während die Kolbenstange 3 an den ebenfalls nicht dargestellten Geberzylinder des Kupplungsbetätigungssystems des Kraftfahrzeuges führt.

Die Kolbenstange 3 umschließt einen zylindrisch ausgebildeten Stift 4, welcher die Kolbenstange 3 in Richtung Dämpfungsgehäuse 2 überragt. Dabei greift das Ende des Stiftes 4 in das Dämpfungsgehäuse 2 ein, wobei der Stift 4 in der Kolbenstange 3 fest gelagert ist, während der Stift 4 in dem Dämpfungsgehäuse 2 in einem Loslager gehalten ist. Innerhalb des Dämpfungsgehäuses 2 ist zwischen dem Dämpfungsgehäuse 2 und der Kolbenstange 3 ein Dämpfungselement in Form eines Gummidämpfers 5 angeordnet.

An der Kolbenstange 3 ist ein erster, sich um die Kolbenstange 3 radial erstreckender Teller 6 angeordnet, welcher zwei Vorsprünge in Form von zwei sich gegenüberliegenden Segmenten 9 aufweist (Schnitt A-A). Die Segmente 9 greifen in je eine Ausnehmung 10 ein, welche innen am Dämpfungsgehäuse 2 ausgebildet sind. Durch ein Verdrehen der Segmente 9 um annähernd 90° wird eine Verriegelung zwischen dem Kolbenelement 3 und dem Dämpfungsgehäuse 2 erreicht, indem das Segment 9 hinter einen Hinterschnitt des Dämpfungsgehäuses 2 geschoben und dort gehalten wird. Mittels eines Spannstiftes 11, welcher radial durch das Dämpfungsgehäuse 2 geschoben ist und an der Kolbenstange 3 anliegt, wird zuverlässig verhindert, dass sich die Kolbenstange 3 aus ihrer Verriegelung im Dämpfungsgehäuse 2 löst.

Schnitt B-B zeigt eine Detailansicht des Kolbenstangendämpfers 1. Aus dieser Ansicht geht insbesondere hervor, dass die Kolbenstange 3 drei sich rotationssymmetrisch erstreckende Teller 6, 7, 8 aufweist. Dabei ist der erste Teller 6, welcher den bajonettähnlichen Verschluss mit dem Dämpfungsgehäuse 2 eingeht, zwischen zwei weiteren Tellern 7 und 8 angeordnet. Der zweite Teller 7 liegt an dem Dämpfungselement 5 an und ist dem Dämpfungsgehäuse 2 zugewandt. Dieser zweite Teller 7 dient beim Einbau der Kolbenstange 3 in das Dämpfungsgehäuse 2 der Zentrierung der Kolbenstange 3, um eine gute Lagerung der Kolbenstange 3 und des Stiftes 4 in dem Dämpfungsgehäuse 2 zu ermöglichen. Der dritte Teller 8 ist bei der verbauten Kolbenstange 3 außerhalb des Dämpfungsgehäuses 2 gelagert und weist auf der dem Teller 6 zugewandten Seite eine Abschrägung auf. Dieser dritte Teller 8 dient als Anschlag für einen Schweißring des Geberzylinders, welcher nicht weiter dargestellt ist. Darüber hinaus geht hervor, dass der erste Teller 6 in die Ausnehmung 10 des Dämpfungsgehäuses 2 eingreift.

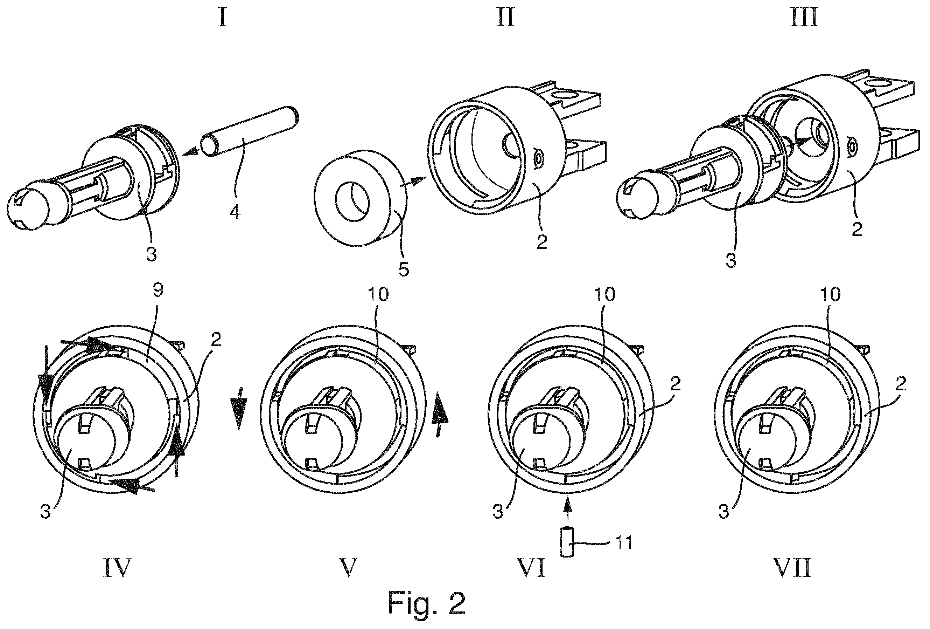

Im Zusammenhang mit Figur 2 soll nun die Montage des Kolbenstangendämpfers 1 gemäß Figur 1 erläutert werden. In einem ersten Schritt wird der Stift 4 in die Kolbenstange 3 eingeschoben. Anschließend wird das Dämpfungselement 5 in das Innere des Dämpfungsgehäuses 2 eingelegt. Ist das Dämpfungselement 5 in das Dämpfungsgehäuse 2 eingelegt, wird die den Stift 4 tragende Kolbenstange 3 in das Dämpfungsgehäuse 2 eingeschoben. Dabei ist darauf zu achten, dass die Segmente 9 der Kolbenstange 3 genau in die Ausnehmungen 10 des Dämpfungsgehäuses 2 eingelegt werden (Schritt 4). Im Schritt 5 wird die Kolbenstange 3 mit etwas Kraft gegen das Dämpfungselement 5 soweit gedrückt, dass das Dämpfungsgehäuse 2 bei gleichzeitiger Fixierung der Kolbenstange 3 nach einer 90°-Drehung an den Segmenten 9 der Kolbenstange 3 anschlägt, welche durch einen Hinterschnitt am Dämpfungsgehäuse 2 gehalten werden. Nach Abschluss der Verriegelung wird im Schritt 6 der Spannstift 11 radial durch eine Bohrung im Dämpfungsgehäuse 2 gepresst und soweit gegen die Kolbenstange 3 gedrückt, dass diese sich nicht mehr verdrehen kann. Im Schritt 7 ist dann der Kolbenstangendämpfer 1 vollständig montiert.

Bei der Betätigung des nicht weiter dargestellten Kupplungspedals wird das Dämpfungsgehäuse 2 gegen den Stift 4 gedrückt. Aufgrund des vorhandenen Spiels zwischen Dämpfungsgehäuse 2 und Stift 4 tritt dabei ein maximaler Dämpfungsweg auf. Erst wenn das Kupplungspedal so weit durchgedrückt ist, dass das Dämpfungsgehäuse 2 das Dämpfungselement 5 soweit zusammengedrückt hat, dass die Kraft des Dämpfungsgehäuses 2 auf die Kolbenstange 3 übertragen wird, wird der nicht weiter dargestellte Geberzylinder der Kupplungsbetätigungseinrichtung betätigt.

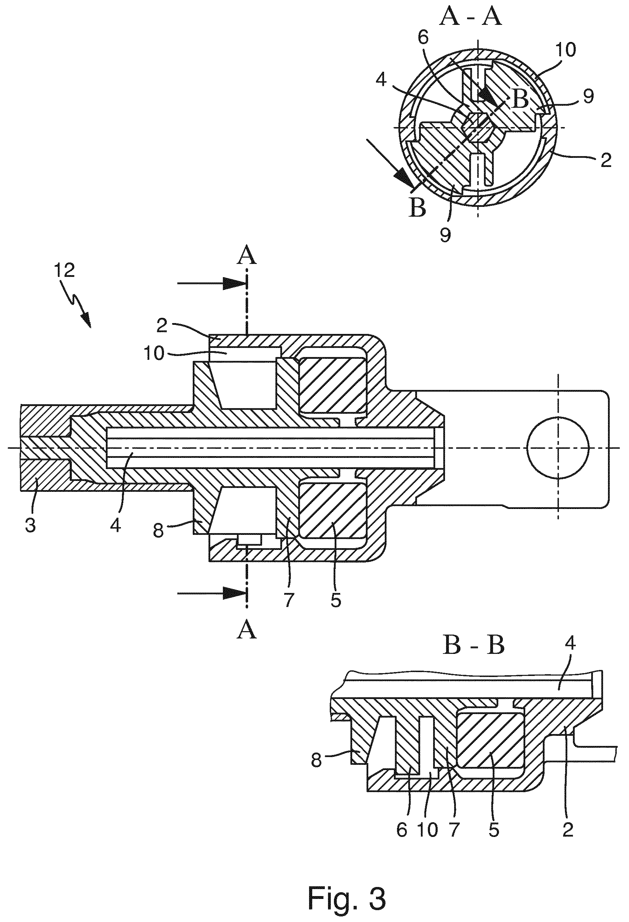

Figur 3 zeigt eine zweite Ausführungsform des Kolbenstangendämpfers 12, welcher sich gegenüber dem Kolbenstangendämpfer 1 der Figur 1 dahingehend unterscheidet, dass der Spannstift 11 als Verriegelung zwischen den Segmenten 9 der Kolbenstange 3 und des Dämpfungsgehäuses 2 entfällt. In diesem Ausführungsbeispiel weist der Stift 4 einen sechseckigen Querschnitt auf und bildet den Verdrehschutz dieses Kolbenstangendämpfers 12. Auch bei diesem Kolbenstangendämpfer 12 ist ein Bajonettverschluss zwischen dem Segment 9 der Kolbenstange 3 und der Ausnehmungen 10 des Dämpfungsgehäuses 2 vorgesehen, wobei die Segmente 9 der Kolbenstange 3 nach der Montage durch einen Hinterschnitt am Dämpfungsgehäuse 2 gehalten werden.

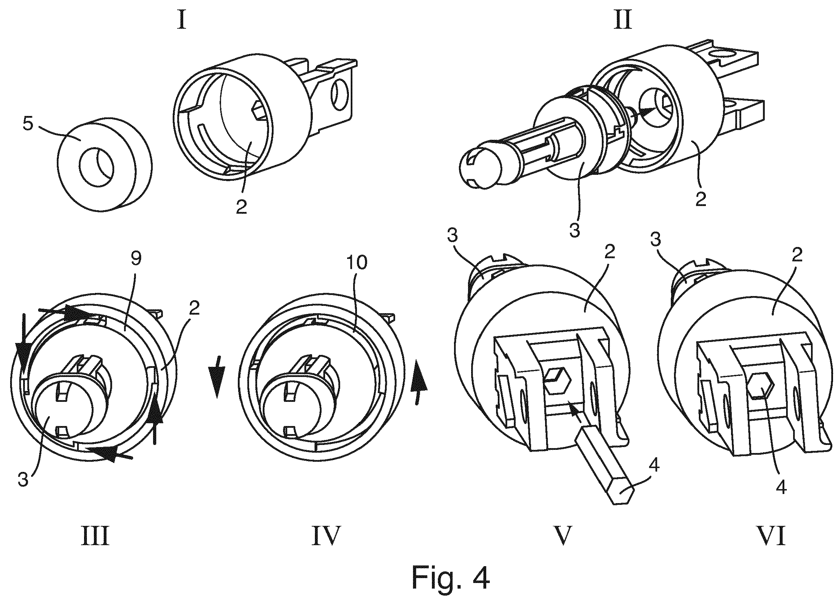

Die einzelnen Montageschritte dieses Kolbenstangendämpfers 12 sind in Figur 4 dargestellt. Dabei wird in einem ersten Schritt zunächst das Dämpfungselement 5 in das Dämpfungsgehäuse 2 eingelegt. Anschließend wird die Kolbenstange 3 in das Dämpfungsgehäuse 2 inklusive dem Dämpfungselement 5 gesteckt (Schritt 2). Dabei wird im Schritt 3 die Kolbenstange 3 so in das Dämpfungsgehäuse 2 eingeführt, dass die zwei Segmente 9 der Kolbenstange 3 in jeweils eine Ausnehmung 10 des Dämpfungsgehäuses 2 eingreifen. Anschließend wird im Schritt 4 mit etwas Kraft das Dämpfungselement 5 soweit eingedrückt, dass das Dämpfungsgehäuse 2 bei gleichzeitiger Fixierung der Kolbenstange 3 nach einer 90°-Drehung an den Segmenten 9 der Kolbenstange 3 anschlägt und die Segmente 9 der Kolbenstange 3 durch den Hinterschnitt am Dämpfungsgehäuse 2 gehalten werden. Nachdem diese Montageschritte beendet sind, wird in einem weiteren Schritt 5 der sechseckige Stift 4 axial durch das Dämpfungsgehäuse 2 in die Kolbenstange 3 eingepresst. Dabei weisen das Dämpfungsgehäuse 2 als auch die Kolbenstange 3 eine sechseckige Öffnung auf, welche automatisch durch die Stellung des Bajonettverschlusses zueinander ausgerichtet sind. Der fertige Kolbenstangendämpfer 1 ist dann in Schritt 6 dargestellt, wobei der sechseckige Stift 4 als Verdrehsicherung durch das Dämpfungsgehäuse 2 in die Kolbenstange 3 gepresst ist, so dass sich die Kolbenstange 3 nicht mehr entriegeln kann. Diese Ausgestaltung erlaubt eine robuste Ausführung des Kolbenstangendämpfers 12, welcher ein in sich geschlossenes Dämpfungselement bildet.

In Figur 5 ist ein modifizierter Kolbenstangendämpfer 13 dargestellt, welcher ebenfalls drei rotationssymmetrisch um die Kolbenstange 3 verlaufende Teller 6, 8, 16 aufweist. Dabei weisen die Teller 6, 16, welche nebeneinander liegend gegenüber dem Dämpfungsgehäuse 2 ausgebildet sind, gleiche Geometrien auf. Am Dämpfungsgehäuse 2 sind innen liegend zwei radial verlaufende Einschnappringe 14 und 15 ausgebildet, welche von je einem Teller 6, 16 bei der Montage hintergriffen werden. Im Einzelnen ist der Teller 6 auf dem Einschnappring 15 gelagert, während der Teller 16 auf dem Einschnappring 14 positioniert ist.

Durch die Ausgestaltung eines doppelten Schnappringes 14, 15 hält das Dämpfungsgehäuse 2 höheren Ausreißkräften stand, da sich diese Kräfte bei diesem Ausführungsbeispiel auf die beiden Einschnappringe 14, 15 verteilen. Bei der Montage wird die Kolbenstange 3 nach dem Einfügen des Dämpfungselementes 5 in das Dämpfergehäuse 2 in dieses eingepresst, so dass die Teller 6 und 16 hinter die Vorsprünge der Schnappringe 14 und 15 gedrückt werden, so dass die Kolbenstange 3 fest in dem Dämpfungsgehäuse 2 arretiert ist.

### Bezugszeichenliste

- a.: Kolbenstangendämpfer
- b.: Dämpfungsgehäuse
- c.: Kolbenstange
- d.: Stift
- e.: Gummidämpfer
- f.: Teller
- g.: Teller
- h.: Teller
- i.: Segment
- j.: Ausnehmung
- k.: Spannstift
- l.: Kolbenstangendämpfer
- m.: Kolbenstangendämpfer
- n.: Einschnappring
- o.: Einschnappring
- p.: Teller
- q.: Kolbenstangendämpfer
- r.: Dämpfungsgehäuse
- s.: Kolbenstange
- t.: Zylinderstift
- u.: Dämpfungselement
- v.: Teller
- w.: Endanschlag
- P: Festlager
- L: Loslager
- DW: Dämpfungsweg

## Patentansprüche

1. Schwingungsdämpfer, insbesondere ein Kolbenstangendämpfer für ein Kraftfahrzeug, umfassend ein Dämpfungsgehäuse (2), welches eine Kolbenstange (3) aufnimmt, welche einen Stift (4) umfasst, der in dem Dämpfungsgehäuse (2) mit einem Spiel gelagert ist, wobei ein erster Teller (6) der Kolbenstange (3) mit dem Dämpfungsgehäuse (2) verriegelt ist und zwischen der Kolbenstange (3) und dem Dämpfungsgehäuse (2) ein Dämpfungselement (5) gelagert ist, **dadurch gekennzeichnet, dass** die Verriegelung zwischen dem ersten Teller (6) der Kolbenstange (3) und dem Dämpfungsgehäuse (2) als bajonettähnlicher Verschluss (9, 10) ausgebildet ist.

2. Schwingungsdämpfer nach Anspruch 1, **dadurch gekennzeichnet, dass** zur Bildung des bajonettähnlichen Verschlusses (9, 10) der erste Teller (6) der Kolbenstange (3) mindestens einen Vorsprung (9) aufweist, welcher in eine Ausnehmung (10) an der Innenseite des Dämpfungsgehäuses (2) eingreift und der Vorsprung (9) gegenüber der Ausnehmung (10) verdreht ist, wobei sich der Vorsprung (9) und die Ausnehmung (10) vorzugsweise radial an der Kolbenstange (3) und dem Dämpfungsgehäuse (2) erstrecken.

3. Schwingungsdämpfer nach Anspruch 2, **dadurch gekennzeichnet, dass** der Vorsprung (9) segmentartig ausgebildet ist, wobei die Ausnehmung (10) eine zum Vorsprung (9) komplementäre Form aufweist.

4. Schwingungsdämpfer nach Anspruch 1, 2 oder 3, **dadurch gekennzeichnet, dass** ein radial durch das Dämpfungsgehäuse (2) geführtes Spannelement (11) als Verdrehschutz des bajonettähnlichen Verschlusses (9, 10) an der Kolbenstange (3) angreift.

5. Schwingungsdämpfer nach Anspruch 1, 2 oder 3, **dadurch gekennzeichnet, dass** der von der Kolbenstange (3) umfasste Stift (4) als Verdrehschutz des bajonettähnlichen Verschlusses (9, 10) einen eckigen Querschnitt aufweist.

6. Schwingungsdämpfer nach Anspruch 5, **dadurch gekennzeichnet, dass** der Querschnitt des Stiftes (4) sechseckig ausgebildet ist.

7. Schwingungsdämpfer nach mindestens einem der vorhergehenden Ansprüche, **dadurch gekennzeichnet, dass** die Kolbenstange (3) einen zweiten Teller (7) zur Zentrierung der Kolbenstange (3) in dem Dämpfungsgehäuse (2) aufweist, welcher dem Dämpfungselement (5) gegenüberliegend ausgebildet ist.

8. Schwingungsdämpfer nach mindestens einem der vorhergehenden Ansprüche, **dadurch gekennzeichnet, dass** ein dritter Teller (8) der Kolbenstange (3) dem Dämpfungselement (5) abgewandt ausgebildet ist, dessen dem ersten Teller (6) zugewandte Seite radial abgeschrägt ist.

## Claims

1. Vibration damper, in particular a piston rod damper for a motor vehicle, comprising a damping housing (2) which receives a piston rod (3) which surrounds a pin (4) which is mounted with a play in the damping housing (2), a first disc (6) of the piston rod (3) being locked to the damping housing (2), and a damping element (5) being mounted between the piston rod (3) and the damping housing (2), **characterized in that** the locking means between the first disc (6) of the piston rod (3) and the damping housing (2) is configured as a bayonet-like closure (9, 10).

2. Vibration damper according to Claim 1, **characterized in that**, in order to form the bayonet-like closure (9, 10), the first disc (6) of the piston rod (3) has at least one projection (9) which engages into a recess (10) on the inner side of the damping housing (2), and the projection (9) is rotated with respect to the recess (10), the projection (9) and the recess (10) preferably extending radially on the piston rod (3) and the damping housing (2).

3. Vibration damper according to Claim 2, **characterized in that** the projection (9) is of segment-like configuration, the recess (10) having a shape which is complementary with respect to the projection (9).

4. Vibration damper according to Claim 1, 2 or 3, **characterized in that** a clamping element (11) which is guided radially through the damping housing (2) acts on the piston rod (3) as an anti-rotation protection means of the bayonet-like closure (9, 10).

5. Vibration damper according to Claim 1, 2 or 3, **characterized in that** the pin (4) which is surrounded by the piston rod (3) has an angular cross section as anti-rotation protection means of the bayonet-like closure (9, 10).

6. Vibration damper according to Claim 5, **characterized in that** the cross section of the pin (4) is of hexagonal configuration.

7. Vibration damper according to at least one of the preceding claims, **characterized in that** the piston rod (3) has a second disc (7) for centring the piston rod (3) in the damping housing (2), which second disc (7) is configured so as to lie opposite the damping element (5).

8. Vibration damper according to at least one of the preceding claims, **characterized in that** a third disc (8) of the piston rod (3) is configured so as to face away from the damping element (5), the side of which third disc (8), which faces the first disc (6), is bevelled radially.

## Revendications

1. Amortisseur de vibrations, en particulier amortisseur de tige de piston pour un véhicule automobile, comprenant un boîtier d'amortissement (2) qui reçoit une tige de piston (3) qui comprend un noyau (4) qui est supporté avec jeu dans le boîtier d'amortissement (2), un premier plateau (6) de la tige de piston (3) étant verrouillé au boîtier d'amortissement (2) et, entre la tige de piston (3) et le boîtier d'amortissement (2) étant supporté un élément d'amortissement (5), **caractérisé en ce que** le verrouillage entre le premier plateau (6) de la tige de piston (3) et le boîtier d'amortissement (2) est réalisé sous forme de fermeture de type à baïonnette (9, 10).

2. Amortisseur de vibrations selon la revendication 1, **caractérisé en ce que** pour former la fermeture de type à baïonnette (9, 10), le premier plateau (6) de la tige de piston (3) présente au moins une saillie (9) qui s'engage dans un évidement (10) au niveau du côté intérieur du boîtier d'amortissement (2) et la saillie (9) est tournée par rapport à l'évidement (10), la saillie (9) et l'évidement (10) s'étendant de préférence radialement au niveau de la tige de piston (3) et du boîtier d'amortissement (2).

3. Amortisseur de vibrations selon la revendication 2, **caractérisé en ce que** la saillie (9) est réalisée en forme de segment, l'évidement (10) présentant une forme complémentaire à celle de la saillie (9).

4. Amortisseur de vibrations selon la revendication 1, 2 ou 3, **caractérisé en ce qu'**un élément de serrage (11) guidé radialement à travers le boîtier d'amortissement (2) vient en prise en tant que protection contre la rotation de la fermeture de type à baïonnette (9, 10) avec la tige de piston (3).

5. Amortisseur de vibrations selon la revendication 1, 2 ou 3, **caractérisé en ce que** le noyau (4) entouré par la tige de piston (3) présente, en tant que protection contre la rotation de la fermeture de type baïonnette (9, 10) une section transversale angulaire.

6. Amortisseur de vibrations selon la revendication 5, **caractérisé en ce que** la section transversale du noyau (4) est réalisée sous forme hexagonale.

7. Amortisseur de vibrations selon au moins l'une quelconque des revendications précédentes, **caractérisé en ce que** la tige de piston (3) présente un deuxième plateau (7) pour le centrage de la tige de piston (3) dans le boîtier d'amortissement (2), lequel est réalisé en regard de l'élément d'amortissement (5).

8. Amortisseur de vibrations selon au moins l'une quelconque des revendications précédentes, **caractérisé en ce qu'**un troisième plateau (8) de la tige de piston (3) est réalisé à l'opposé de l'élément d'amortissement (5), dont le côté tourné vers le premier plateau (6) est biseauté radialement.
